# EUROPEAN PATENT SPECIFICATION

(11) **EP 1 691 102 B1**
(45) Date of publication and mention of the grant of the patent: **26.03.2008**
(21) Application number: 05250766.2
(22) Date of filing: 10.02.2005
(51) Int. Cl.: F16D 65/092

(54) **Disc brake pad assembly**
Scheibenbremsbelag
Patin de frein à disque

(43) Date of publication of application: 16.08.2006
(73) Proprietor: Federal-Mogul Friction Products GmbH, 65520 Bad Camberg (DE)
(72) Inventor: Emmett, Robert Allen, 56477 Rennerod (DE); Strauss, Wilfried, 69483 Wald-Michelbach (DE); Aiacoboaie, Mircea, 51645 Gummersbach (DE)
(74) Representative: Becker Kurig Straus

(56) References cited:
- EP-A- 1 408 252
- DE-A1- 10 154 334
- FR-A- 2 446 962
- FR-A- 2 723 411
- GB-A- 1 485 701
- US-A1- 2002 129 996
- PATENT ABSTRACTS OF JAPAN vol. 2000, no. 09, 13 October 2000 (2000-10-13) -& JP 2000 170808 A (HITACHI CHEM), 23 June 2000 (2000-06-23)

## Description

This invention is concerned with a disc brake pad assembly.

A conventional disc brake of the spot type comprises a disc which rotates with a wheel and pads arranged on opposite sides of the disc. The pads comprise friction material and, in the operation of the brake, are movable into engagement with the disc to slow its rotation and hence that of the wheel. A conventional disc brake pad assembly comprises one or more blocks of friction material which are fixedly mounted on a metal back plate which is in turn mounted on the brake. For example, the friction material may comprise various particulate materials bound together by thermo-setting resin. Normally the resin is a phenolic resin. The friction material is formed in a cavity by applying heat and pressure to particulate material so that the material is formed into a block. One side of the cavity is defined by the backplate so that the block adheres to the backplate.

In a conventional disc brake, one of the pad assemblies is mounted on one side of the disc to be moved by the action of one or more piston and cylinder assemblies operating hydraulically or pneumatically. The other pad assembly is mounted on the other side of the disc where it is fixed to a caliper which is also moved by the action of the piston and the cylinder assembly. It is also possible for a disc brake to have two or more parallel discs, in which case one pad assembly is mounted at each end of the row of discs to engage the disc closest to it, and further pad assemblies are mounted between the discs.

When the friction material of a pad assembly of a conventional disc brake becomes worn to the point where the brake is approaching becoming ineffective, the pad assembly is replaced. The backplate with a small amount of friction material attached thereto is discarded. It has been recognised that discarding the backplate which has not been subject to significant wear is wasteful and various proposals have been made for providing that the backplate can be retained while replacing only the friction material. EP 1180612 discloses an assembly in which cylindrical blocks of friction material are mounted in recesses in a mounting plate, the blocks being provided with a metal ring around the portion which is received in the recess. The metal ring has the purpose of preventing the blocks from sticking in the recesses so that they would be difficult to remove and replace. However, this solution reduces the area of friction material available to engage the disc and complicates the manufacturing process. EP 1180612 also discloses that the friction block may be formed in layers of different compositions with the material contained within said metal ring being different to that portion of the material which projects out of the ring towards the disc.

It is known for a disc brake pad assembly to have a block of friction material which comprises an under layer which is made of stronger material than an over layer to enable the block to be attached to the backplate by means of fasteners. It is also known to provide conventional pad assemblies with friction material having two layers both of which are intended to engage the disc, the layers being a relatively thin over layer utilised during bedding in of the brake and a relatively thick under layer which comes into operation after the over layer has worn away.

FR 2446962 discloses a disc brake pad assembly having blocks of friction material adhered to back plates which are inserted into grooves in a mounting plate, when the friction material is worn, the back plates are discarded.

GB 1485701 discloses a further pad assembly having friction material blocks fixed in grooves of a mounting plate. In this assembly, the blocks are secured to the plate by bolts which complicates assembly.

It is an object of the present invention to provide a disc brake pad assembly in which discarding of a back plate is avoided without creating the disadvantages mentioned above.

The invention provides a disc brake pad assembly which comprises a mounting plate and at least one block of friction material, the mounting plate being adapted to be mounted in a disc brake for movement towards or away from a disc, and the block being mountable on said mounting plate so that said movement of the mounting plate can bring the block into frictional engagement with the disc, wherein the mounting plate is formed with a re-entrant groove having side surfaces which approach one another, and the block has two opposite end edges which are shaped so that the block can be inserted into the groove and retained by engagement between the side surfaces of the groove and the end edges of the block.

In the assembly according to the invention, the block of friction material may be removed from the mounting plate by sliding it out of the groove and a replacement block inserted into said groove. The friction material block can thus be replaced without discarding the mounting plate and this can be accomplished without removing the mounting plate from the disc brake.

The groove has an entrance into which the block is introduced, the entrance having its opening in an edge of the mounting plate which, when the mounting plate is installed in a disc brake, is the top edge. The groove extends throughout the height of the mounting plate and projections projecting across the groove for preventing a block from falling out of the groove and be provided. Such projections may also serve to locate the blocks when they are inserted into the groove.

The mounting plate may be cast, for example from iron. The mounting plate may also have other features such as recesses for receiving pins or guide rails for mounting the mounting plate in a disc brake. Furthermore, the mounting plate may be provided with additional projections to engage pistons of the disc brake. The mounting plate may also have one or more grooves on the opposite side thereof to the aforementioned grooves so that one or more blocks of friction material may be mounted on each side thereof, this being useful if friction blocks are to be mounted between two discs. The mounting plate may also be formed with one or more holes which can be utilised for receiving fasteners.

Each block of friction material has end edges which are inclined towards one another, in a direction away from the mounting plate and towards the disc, and the groove in the mounting plate has side surfaces which extend parallel to the respective end edges of the block.

In order to ensure stability for the portion of the block which is received in the groove in the mounting plate so that the block can be readily removed from the groove, preferably, the block is formed in layers with an under layer forming the portion of the block which is received in the groove, the under layer being formed of high strength shrinkage-stable material and the remainder of the block being formed of conventional friction material (which may have a bedding in over layer as referred to above). For example, the under layer may be formed of cured phenolic resin heavily filled with glass fibre (a product called Vyncolite is suitable). The block can be manufactured by introducing layers of each formulation into a mould and applying heat and pressure. Preferably, the friction material is also bound by cured phenolic resin.

There now follows a detailed description, to be read with reference to the accompanying drawings, of three disc pad assemblies which are illustrative of the invention.

In the drawings:
Figures 1 and 2 are perspective views of a first illustrative assembly according to the invention, Figure 1 being a view generally from above and in front, and Figure 2 being a view generally from below and in front;
Figures 3, 4 and 5 are, respectively, a top view, a front view and an undemeath view of the first illustrative assembly;
Figure 6 is a perspective view from above and behind of a mounting plate of a second illustrative assembly;
Figure 7 is a front view of the mounting plate shown in Figure 6;
Figure 8 is a top view of the mounting plate of a second illustrative assembly; and
Figures 9, 10 and 11 are views similar to Figures 6, 7 and 8 but of a mounting plate of a third illustrative assembly according to the invention.

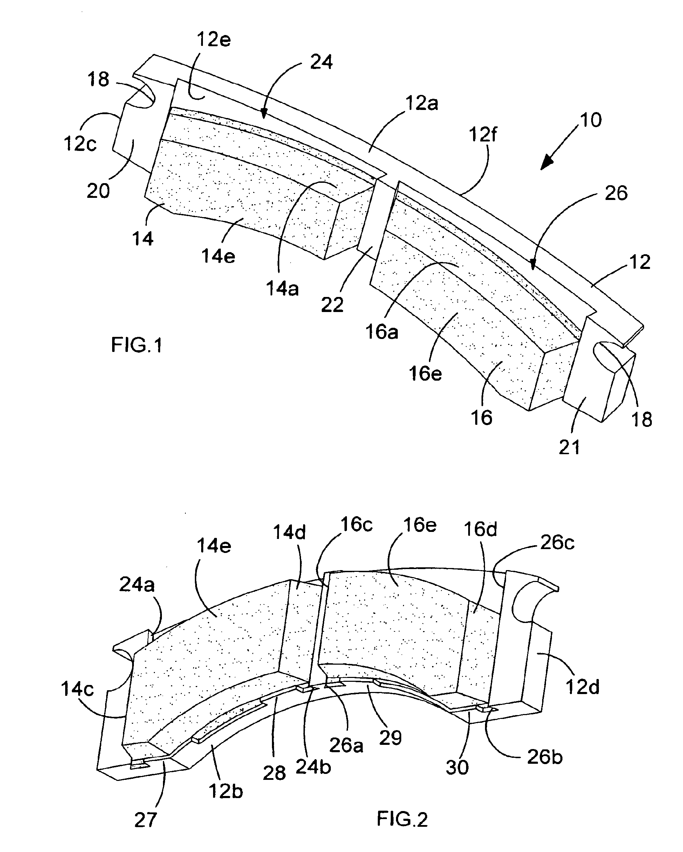

The first illustrative assembly 10 shown in Figures 1 to 5 is a disc brake pad assembly which comprises a mounting plate 12, and two blocks 14 and 16 of friction material.

The mounting plate 12 is adapted to be mounted in a disc brake for sliding movement towards or away from a disc so that the friction blocks 14 and 16 can be brought into frictional engagement with the disc or moved away from the disc. Specifically, the mounting plate 12 is adapted to be mounted on a slideway of the disc brake (not shown) to be moved towards the disc by the action of two piston and cylinder assemblies.

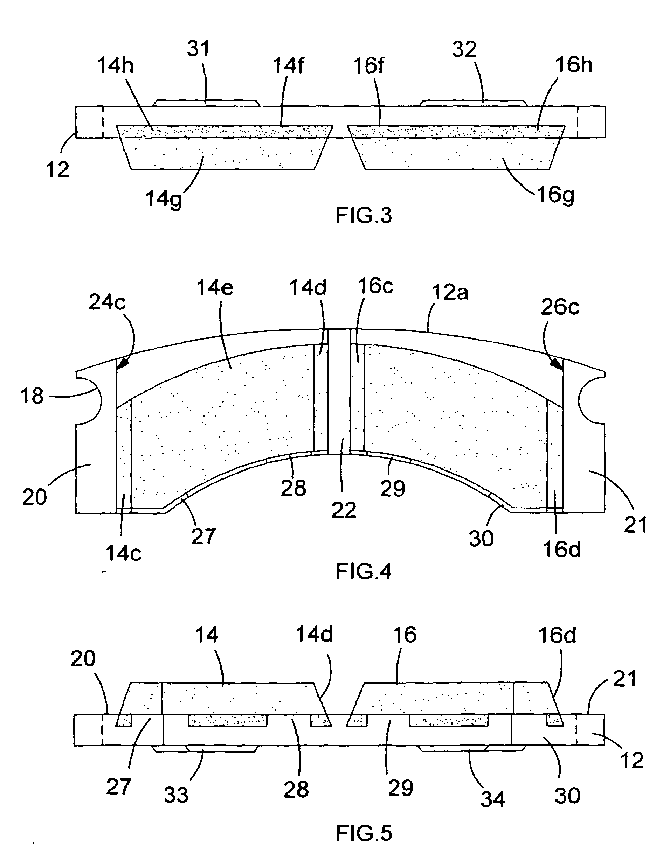

The mounting plate 12 is made of cast iron and is generally flat but with integral projections. When viewed in front or back view (see Figure 4) the plate has a shape defined by a generally arcuate convex top edge 12a, a bottom edge 12b which has two straight portions joined by an arcuate concave portion, and two end edges 12c and 12d which are generally straight. The plate 12 has a front surface 12e and a back surface 12f. The surfaces 12e and 12f are generally planar but each has projections (to be described).

To enable it to be mounted in a disc brake, the mounting plate 12 defines two recesses 18 which each have a semi-circular cross-section, when viewed from the front of the plate 12. One recess 18 is formed in each of the end edges 12c and 12d. Each recess 18 extends from the front surface 12e to the back surface 12f. When the assembly 10 is mounted in a disc brake, parallel pins forming a slideway are received in the recesses 18 so that the assembly 10 can slide towards the disc along the pins.

The front surface 12e of the mounting plate 12 is formed with three groove defining projections 20, 21 and 22. Each of the projections 20, 21 and 22 extends from the top edge 12a to the bottom edge 12b. The projections 20 and 21 are at the ends of the mounting plate and extend to the edges 12c and 12d, respectively, and the projection 22 is positioned in the centre of the plate mid-way between the projections 20 and 21. These projections 20, 21 and 22 define two grooves 24 and 26 both of which extend from the top edge 12a of the plate 12 to the bottom edge 12b thereof. Each of the grooves 24 and 26 has side surfaces 24a and 24b, and 26a and 26b, which are provided, in the case of the groove 24, by the projections 20 and 22 and, in the case of the groove 26, by the projections 21 and 22. The side surfaces of each of the grooves 24 and 26 are each generally planar but they are inclined relative to a direction normal to the front surface 12e. Specifically, the side surfaces of each groove 24 and 26 are inclined relative to each other so that they approach one another in a direction away from the front surface 12e. Thus, the grooves 24 and 26 are re-entrant with an opening which is narrower than the bottom of the groove. Hence the grooves 24, 26, when viewed from the top edge 12a of the plate 12 (Figure 3) have a dovetail shape.

Also projecting from the front surface 12e are four projections 27, 28, 29 and 30. All of these four projections extend generally in a direction which is parallel to the bottom edge 12b and each is in the form of a tag, ie it is thin and plate-like. All the projections 27, 28, 29 and 30 are positioned adjacent to the bottom edge 12b of the plate 12 and are arranged so that two of them project across each of the grooves 24 and 26, thereby closing the opening of the grooves in the bottom edge 12b (the opening in the top edge 12a provides an entrance 24c, 26c of the groove). Two of the projections 28 and 29 which are adjacent to the central projection 22 conform to the shape of the arcuate portion of the edge 12b. The other two projections 27 and 30 are adjacent, respectively, to the end projections 20 and 21 and conform to the shape of the bottom edge 12b at the junctions of the arcuate portion and the straight portions thereof.

The plate 12 also has four projections 31, 32, 33 and 34 (see Figures 3 and 5) from its back surface 12f. These projections are arranged to fit pistons of a disc brake used to move the assembly 10 in braking. These projections are cast integrally with the remainder of the back-plate 12.

The friction material blocks 14 and 16 of the assembly 10 are similar to one another except that they are shaped as mirror images of one another. Each block 14 and 16 has a shape which is defined by a top edge 14a, 16a, a bottom edge 14b, 16b and two side edges 14c, 14d and 16c, 16d. The bottom edges 14b, 16b each have a concave arcuate portion and a straight portion so that each edge 14b and 16b conforms to the shape of part of the edge 12b of the plate 12. The top edges 14a, 16a are generally in a convex arcuate shape but do not conform to the arcuate shape of the edge 12a of the plate 12. Instead these edges concentric with the arcuate portion of the edges 14b, 16b. The side edges 14c, 14d and 16c, 16d are generally planar. However, the edges 14c, 14d, 16c, 16d are inclined towards one another in a direction away from a bottom surface 14f, 16f of the block. Each block also has a front surface 14e, 16e which is intended to engage the disc when the assembly 10 is mounted in a disc brake.

Each of the blocks 14 and 16 is integrally moulded in a lamina structure which has two layers (see Figure 3). A first of these layers is an over layer 14g, 16g which forms that part of the block which projects out of the groove 24, 26 in which the block is mounted. The over layer 14g, 16g defines the front surface 14e, 16e of the block. The second of these layers is an under layer 14h, 16h which forms that part of the block which is received within the groove 24, 26. Specifically, both the over layer 14g, 16g and the under layer 14h, 16h have a matrix formed of cured phenolic resin. However, the resin of the over layer is filled with conventional friction material fillers to provide a good friction couple with the disc whereas the resin of the under layer is densely filled with glass fibre to form a strong stable structure.

The friction material blocks 14 and 16 are mounted on the mounting plate 12 by being inserted into the entrances 24c, 26c of the grooves 24 and 26 which open at the top edge 12a of the plate. The blocks 14 and 16 can then slide down the grooves 24 and 26 until they engage and are located by the projections 27 and 28, in the case of the block 14, and 29 and 30, in the case of the block 16, and engagement between the side surfaces 24a, 24b, 26a, 26b of the grooves and the side edges 14c, 14d, 16c, 16d of the blocks holds the blocks on the mounting plate 12. The assembly is mounted in a disc brake with pins received in the recesses 18 of the mounting plate 12. The assembly is mounted with the top edges 12a, 14a and 16a of the plate 12 and the blocks 14 and 16 uppermost so that the blocks 14 and 16 are prevented by gravity from leaving the grooves 24 and 26. When the blocks 14 and 16 have worn to an extent where replacement is necessary, the blocks can be moved upwardly out of the grooves 24 and 26 and replacement blocks can be introduced into the grooves. This can be done without removing the plate 12 from the brake and the plate 12 is not discarded.

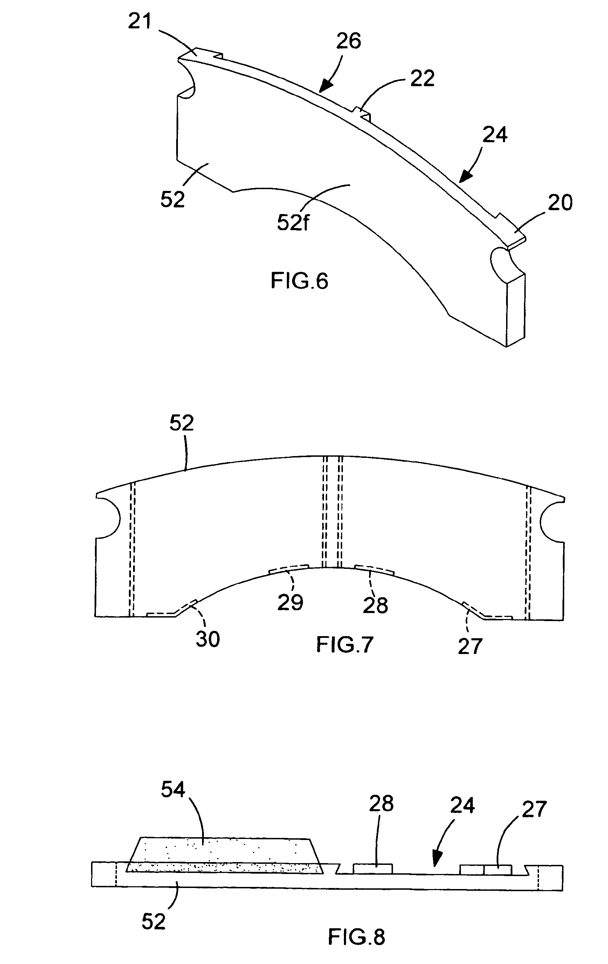

Figures 6, 7 and 8 and Figures 9, 10 and 11, respectively, illustrate the second and third illustrative assemblies. These assemblies are similar to the assembly 10 and only the differences between them are described below.

The second illustrative assembly is similar to the assembly 10 and comprises two blocks of friction material which are identical to the blocks 14 and 16. One of these blocks 54 is shown in Figure 8. The second illustrative assembly also comprises a mounting plate 52 which is similar to the plate 12 except that it lacks the projections 31, 32, 33 and 34. The back surface 52f of the plate 52 is therefore planar. Other parts of the plate 52 are identical to equivalent parts of the plate 12 and are given the same reference numerals in the drawings without further description.

The second illustrative assembly is intended to be mounted on the opposite side of a disc from the first illustrative assembly 10 so that blocks of friction material thereof can engage opposite surfaces of the disc. Specifically, the mounting plate 52 is fixed to a slidable caliper of a disc brake, the caliper being movable when piston and cylinder assemblies operate to move the assembly 10 towards the disc. The first and second illustrative assemblies can also be utilised in a disc brake which has more than one disc, with an assembly such as the third illustrative assembly described below mounted in each space between the discs.

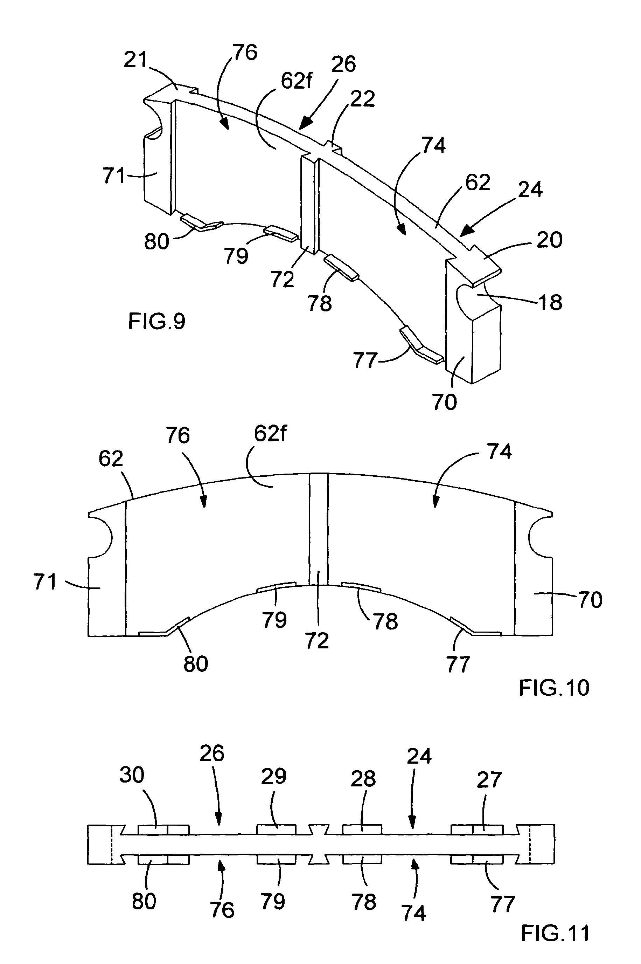

The third illustrative assembly is illustrated by Figures 9 to 11. This assembly is similar to the assembly 10 and comprises two blocks of friction material which are identical to the blocks 14 and 16. The third illustrative assembly also comprises a mounting plate 62 which is similar to the plate 12 except that it lacks the projections 31, 32, 33 and 34, and has projections 70, 71 and 72 from its back surface 62f which are mirror images of the projections 20, 21 and 22 from its front surface 62e. The plate 62 also has projections 77, 78, 79 and 80 from its back surface 62f which are mirror images of the projections 27, 28, 29 and 30. Thus, the back surface 62f of the plate 62 is identical to the front surface 62e thereof and therefore forms two further grooves 74 and 76 which are similar to the grooves 24 and 26. Further blocks of friction material (not shown) identical to the blocks 14 and 16 are mounted in these grooves. These blocks are located and retained in the grooves 74 and 76 by the projections 77, 78, 79 and 80. The assembly, thus, has two friction material blocks facing in one direction and two further such blocks facing in the opposite direction. Other parts of the plate 62 are identical to equivalent parts of the plate 12 and are given the same reference numerals in the drawings without further description.

## Claims

1. A disc brake pad assembly (10) which comprises a mounting plate (12; 52; 62) and at least one block (14, 16; 54) of friction material the block (14, 16; 54) being integrally moulded, the mounting plate being adapted to be mounted in a disc brake for movement towards or away from a disc, and the block (14,16;54) being mountable on said mounting plate (12;52;62) so that said movement of the mounting plate (12;52;62) can bring the block into frictional engagement with the disc, wherein
the mounting plate (12;52;62) is formed with a re-entrant groove (24, 26; 74, 76) having side surfaces (24a, 24b, 26a, 26b) which approach one another, the groove (24,26,74,76) has an entrance (24c, 26c) by which the block (14, 16, 54) can be introduced into the groove (24,26;74,76), the top edge when the mounting plate (12,52,62) is installed in a disc brake; and
the groove (24, 26, 74, 76) extends throughout the height of the mounting plate (12, 52, 62) **characterized in that** the block (14;16;54) has two opposite end edges (14c, 14d, 16c, 16d) which are shaped so that the block (14,16,54) can be inserted into the groove (24,26,74,76) and retained by engagement between the side surfaces (24a,24b,26a26b) of the groove (24,26;74,76) and the end edges (14c,14d,16c,16d) of the blocks (14,16,54) and **in that** projections (27, 28, 29, 30, 77, 78, 79, 80) of the mounting plate (12,52,62) extend across the groove on the edge (12b) of the mounting plate (12,52,62) being the bottom edge when the mounting plate (12,52,62) is installed in a disc brake to prevent the block (14, 16, 54) from falling out of the groove (24,26;74,76).

2. A pad assembly according to claim 1, **characterized in that** the mounting plate (12) has projections (31, 32, 33, 34) from its back surface (12f) which are adapted to engage pistons of a disc brake.

3. A pad assembly according to any one of claims 1 or 2, **characterized in that** the mounting plate (62) has projections (70, 71, 72) from its back surface (62f) which form at least one further re-entrant groove (74, 76) so that blocks (14, 16, 54) of friction material may be mounted on opposite sides of the plate.

4. A pad assembly according to any one of claims 1 to 3, **characterized in that** the mounting plate (12, 52, 62) is integrally formed from cast iron.

5. A pad assembly according to any one of claims 1 to 4, **characterized in that** the block (14, 16, 54) of friction material has end edges (14c, 14d, 16c, 16d) which are inclined towards one another and the groove (24, 26, 74, 76) has side surfaces (24a, 24b, 26a, 26b) which extend parallel to the respective end edges of the block.

6. A pad assembly according to any one of claims 1 to 5, **characterized in that** the block (14, 16, 54) of friction material is formed in layers of materials of different compositions, the layers comprising an under layer (14h, 16h) which forms the portion of the block which is received in the groove (24, 26, 74, 76).

7. A pad assembly according to claim 6, **characterized in that** the under layer (14h, 16h) has a composition which comprises cured phenolic resin and a major proportion of glass fiber.

## Patentansprüche

1. Scheibenbremsbelag-Anordnung (10), die eine Trägerplatte (12; 52; 62) und mindestens einen Block (14, 16; 54) aus Reibmaterial umfasst, wobei der Block (14, 16; 54) einteilig ausgeformt ist, wobei die Trägerplatte dazu angepasst ist, in einer Scheibenbremse befestigt zu werden, für eine Bewegung auf eine Scheibe zu oder davon weg, und wobei der Block (14, 16; 54) so auf der Trägerplatte (12; 52; 62) anbringbar ist, dass die Bewegung der Trägerplatte (12; 52; 62) den Block in Reibschluss mit der Scheibe bringen kann, wobei
die Trägerplatte (12; 52; 62) mit einer hinterschnittenen Rille (24, 26; 74, 76) ausgebildet ist, welche Seitenflächen (24a, 24b, 26a, 26b) aufweist, die aufeinander zu laufen,
die Rille (24, 26, 74, 76) einen Eingang (24c, 26c) aufweist, durch welchen der Block (14, 16, 54) in die Rille (24, 26, 74, 76) eingeführt werden kann, wobei der Eingang in der Kante (12a) der Trägerplatte (12, 52, 62) ausgebildet ist, welche die Oberkante ist, wenn die Trägerplatte (12, 52, 62) in einer Scheibenbremse installiert ist; und die Rille (24, 26, 74, 76) sich durch die gesamte Höhe der Trägerplatte (12, 52, 62) erstreckt,
**dadurch gekennzeichnet, dass**
der Block (14, 16; 54) zwei einander entgegengesetzte Endkanten (14c, 14d, 16c, 16d) aufweist, die so geformt sind, dass der Block (14, 16; 54) in die Rille (24, 26; 74, 76) eingeführt werden kann und durch Eingriff zwischen den Seitenflächen (24a, 24b, 26a, 26b) der Rille (24, 26; 74, 76) und den Endkanten (14c, 14d, 16c, 16d) der Blöcke (14, 16; 54) gehalten wird; und dass
Vorsprünge (27, 28, 29, 30, 77, 78, 79, 80) der Trägerplatte (12, 52, 62) sich über die Rille an der Kante (12b) der Trägerplatte (12, 52, 62) erstrecken, welche die Unterkante ist, wenn die Trägerplatte (12, 52, 62) in einer Scheibenbremse installiert ist, um ein Herausfallen des Blocks (14, 16, 54) aus der Rille (24, 26; 74, 76) zu verhindern.

2. Belagsanordnung nach Anspruch 1, **dadurch gekennzeichnet, dass** die Trägerplatte (12) Vorsprünge (31, 32, 33, 34) von ihrer rückseitigen Fläche (12f) aufweist, die dazu angepasst sind, mit Kolben einer Scheibenbremse einzugreifen.

3. Belagsanordnung nach Anspruch 1 oder 2, **dadurch gekennzeichnet, dass** die Trägerplatte (62) Vorsprünge (70, 71, 72) von ihrer rückseitigen Fläche (62f) aufweist, die mindestens eine weitere hinterschnittene Rille (74, 76) bilden, so dass Blöcke (14, 16; 54) aus Reibmaterial auf entgegengesetzten Seiten der Platte montiert werden können.

4. Belagsanordnung nach einem der Ansprüche 1 bis 3, **dadurch gekennzeichnet, dass** die Trägerplatte (12, 52, 62) einteilig aus Gusseisen gebildet ist.

5. Belagsanordnung nach einem der Ansprüche 1 bis 4, **dadurch gekennzeichnet, dass** der Block (14, 16, 54) aus Reibmaterial Endkanten (14c, 14d, 16c, 16d) aufweist, die zueinander geneigt sind, und dass die Rille (24, 26, 74, 76) Seitenflächen (24a, 24b, 26a, 26b) aufweist, die sich parallel zu den entsprechenden Endkanten des Blocks erstrecken.

6. Belagsanordnung nach einem der Ansprüche 1 bis 5, **dadurch gekennzeichnet, dass** der Block (14, 16, 54) aus Reibmaterial in Schichten aus Materialien verschiedener Zusammensetzung gebildet ist, wobei die Schichten eine untere Schicht (14h, 16h) umfassen, die den Teil des Blocks bildet, der in der Rille (24, 26, 74, 76) aufgenommen wird.

7. Belagsanordnung nach Anspruch 6, **dadurch gekennzeichnet, dass** die untere Schicht (14h, 16h) eine Zusammensetzung aufweist, die gehärtete Phenolharze und einen Hauptanteil an Glasfaser umfasst.

## Revendications

1. Ensemble de plaquette de frein à disque (10) qui comprend une plaque de montage (12 ; 52 ; 62) et au moins un bloc (14, 16 ; 54) de matériau de frottement, le bloc (14, 16 ; 54)étant moulé de manière solidaire, la plaque de montage étant adaptée pour être montée dans un frein à disque pour le mouvement vers et à distance d'un disque, et le bloc (14, 16, 54) pouvant être monté sur ladite plaque de montage (12 ; 52 ; 62), de sorte que ledit mouvement de la plaque de montage (12 ; 52 ; 62) peut amener le bloc en prise avec le disque par frottement, dans lequel :
la plaque de montage (12 ; 52 ; 62) est formée avec une rainure réentrante (24, 26 ; 74, 76) ayant des surfaces latérales (24a, 24b, 26a, 26b) qui se rapprochent les unes des autres,
la rainure (24, 26 ; 74, 76) a une entrée (24c, 26c) par laquelle le bloc (14, 16; 54) peut être introduit dans la rainure (24, 26 ; 74, 76), l'entrée étant formée dans le bord (12a) de la plaque de montage (12 ; 52 ; 62) qui est le bord supérieur lorsque la plaque de montage (12 ; 52 ; 62) est installée dans un frein à disque ; et
la rainure (24, 26 ; 74, 76) s'étend sur toute la hauteur de la plaque de montage (12 ; 52 ; 62), **caractérisée en ce que** le bloc (14, 16 ; 54) a deux bords d'extrémité (14c, 14d, 16c, 16d) opposés qui sont formés de sorte que le bloc (14, 16 ; 54) peut être inséré dans la rainure (24, 26 ; 74, 76) et retenu en prise entre les surfaces latérales (24a, 24b, 26a, 26b) de la rainure (24, 26 ; 74, 76) et les bords d'extrémité (14c, 14d, 16c, 16d) des blocs (14, 16, 54) ; et **en ce que** des saillies (27, 28, 29, 30, 77, 78, 79, 80) de la plaque de montage (12 ; 52 ; 62) s'étendent à travers la rainure sur le bord (12b) de la plaque de montage (12 ; 52 ; 62) qui est le bord inférieur lorsque la plaque de montage (12 ; 52 ; 62) est installée dans un frein à disque pour empêcher le bloc (14, 16 ; 54) de sortir de la rainure (24, 26 ; 74, 76).

2. Ensemble de plaquette selon la revendication 1, **caractérisé en ce que** la plaque de montage (12) a des saillies (31, 32, 33, 34) à partir de sa surface arrière (12f) qui sont adaptées pour mettre en prise des pistons d'un frein à disque.

3. Ensemble de plaquette selon l'une quelconque des revendications 1 ou 2, **caractérisé en ce que** la plaque de montage (62) a des saillies (70, 71, 72) à partir de sa surface arrière (62f) qui forment au moins une autre rainure réentrante (74, 76) de sorte que les blocs (14, 16 ; 54) du matériau de frottement peuvent être montés sur les côtés opposés de la plaque.

4. Ensemble de plaquette selon l'une quelconque des revendications 1 à 3, **caractérisé en ce que** la plaque de montage (12, 52, 62) est formée de manière solidaire à partir de fonte.

5. Ensemble de plaquette selon l'une quelconque des revendications 1 à 4, **caractérisé en ce que** le bloc (14, 16, 54) de matériau de frottement a des bords d'extrémité (14c, 14d, 16c, 16d) qui sont inclinés les uns vers les autres et la rainure (24, 26, 74, 76) a des surfaces latérales (24a, 24b, 26a, 26b) qui s'étendent parallèlement aux bords d'extrémité respectifs du bloc.

6. Ensemble de plaquette selon l'une quelconque des revendications 1 à 5, **caractérisé en ce que** le bloc (14, 16, 54) de matériau de frottement est formé en couches de matériaux de différentes compositions, les couches comprenant une couche de dessous (14h, 16h) qui forme la partie du bloc qui est reçue dans la rainure (24, 26, 74, 76).

7. Ensemble de plaquette selon la revendication 6, **caractérisé en ce que** la couche de dessous (14h, 16h) a une composition qui comprend une résine phénolique polymérisée et une proportion majeure de fibres de verre.
